Europäisches Patentamt

European Patent Office

Office européen des brevets

(11) Publication number: **0 483 414 A1**

# EUROPEAN PATENT APPLICATION

(21) Application number: **90202899.2**

(22) Date of filing: **02.11.90**

(51) Int. Cl.5: **A23D 9/00**, C11B 7/00, A23G 9/02, A23G 3/00

(43) Date of publication of application:
**06.05.92 Bulletin 92/19**

(84) Designated Contracting States:
**AT BE CH DE DK ES FR GB GR IT LI LU NL SE**

(71) Applicant: **UNILEVER NV**
**Burgemeester s'Jacobplein 1 P.O. Box 760**
**NL-3000 DK Rotterdam(NL)**

(72) Inventor: **Thompoulous, George**
**3-11-6, Ebisu-Minami,**
**Shibuya-ku, Tokyo 150(JP)**
Inventor: **Klaasen, Maarten J.**
**Zandweg 125**
**1531 AM Wormer(NL)**
Inventor: **van Nieuwenhuyzen, Willem**
**Monetastraat 8**
**1902 CV Castricum(NL)**
Inventor: **Zwikstra, Nico**
**Johan Wagenaarlaan 16**
**2102 GC Heemstede(NL)**

(74) Representative: **Hartong, Richard Leroy et al**
**Unilever N.V. Patent Division P.O. Box 137**
**NL-3130 AC Vlaardingen(NL)**

(54) **Coatings for frozen desserts.**

(57) Coconut olein fractions that display an IV of 8-20 and N-values of $N_0 \geq 70$ and $N_{20} = 5\text{-}20$ are excellent fat components for chocolate fat compositions that are used on frozen desserts, in particular ice creams.

EP 0 483 414 A1

Because of the lowered temperature of chilled or frozen food products, special requirements apply to chocolate compositions, in particular to the fat component thereof, that are used in those food products. As the temperature in the mouth gets lower than normal, it will be difficult to obtain a chocolate composition that gives a good flavour impression in the mouth. Fats suitable in products eaten at ambient temperature also often give rise to waxiness when used in cooled products.

Moreover, there are a number of special requirements associated with manufacturing processes of cooled or frozen products. The coating mixture should, for example, be fluid and, hence, warm, while the coating process must take place without melting the frozen product. Furthermore, a layer of the desired thickness must be obtainable while the drying times of the coatings cannot be too long.

In the resulting product, the melt-down of the coating should be fast for obtaining the desired organoleptic character. The brittleness of the coating is critical for obtaining a product from which the coating does not immediately separate when it is eaten while the coating may not be too soft, because in that case the coating is too plastic, giving an unacceptable organoleptic impression.

Known coatings contain, e.g., palmkernel olein and/or hardened palmkernel olein fractions. In EP 297 720 fractinated soft fats of laurin obtained from palmkernel oil having an IV of 30-40, a melting point of less than 15°C and N-values of $N_5$ = 10-30, $N_{10}$ = 0-20, $N_{15}$ = 0-10 and $N_{20}$ = 0 are described as, among other things, ice cream coating fats. However, according to literature (cf. US 4,400,406, US 4,379,176, US 4,368,211, US 3,232,765, US 3,949,102, EP 297,720 and JP 60/241,853) coconut oil itself is the fat most commonly used in chocolate compositions for ice cream coatings.

However, the use of the soft laurin fat or of coconut oil does not provide a solution to all the problems mentioned above. In particular the brittleness problems are not overcome. The use of a mixture of palmkernel olein and hardened palmkernel olein (also a lauric fat composition) gave a product in which the coating was too soft and, therefore, too plastic.

Therefore, our invention is concerned with coconut olein fractions that have an oleic acid content of 6-15 wt.% and furthermore display an I.V. of 8-20 and N-values (not stabilised) of $N_0$ = $\geq$ 70 and $N_{20}$ = 5-20.

N-values are measured by pulsed NMR according to a method described by van Putte et al. in J. Am. Oil Chem. Soc. 51 (1974), 316.

Preferred compositions are fractions wherein I.V. = 9-15, $N_0$ = 70-90 and $N_{20}$ = 14-18.5.

The chocolate compositions that contain these olein fractions in addition to the normal amounts of sugar, cocoa mass and emulsifier can be used for the preparation of icings or for coatings for frozen desserts. The compositions used for frozen desserts, in particular ice creams, should contain at least 50 wt.% of fat (based on the whole composition) of which at least 50% consists of the coconut olein fraction according to the invention. The non-coconut olein fat used herein can be any fat. Preferred fats, however, are cocoabutter and the fat components present in cocoa mass or cocoa powder.

Part of the invention is also an icing or an ice coating consisting of the chocolate composition containing the required amount of coconut olein. The ice creams and frozen desserts that are provided with such a coating are also part of the invention.

The invention is further concerned with a process for the preparation of coconut olein. For this purpose, coconut oil is dry- or wet-fractionated. In these processes the coconut oleins that meet the requirements of the invention are separated from the other coconut oil fractions (in particular from coconut stearin).

The preferred process is a wet-fractionation process using an organic solvent, in particular hexane, petroleum ether or acetone. In this fractionation process a weight : volume ratio of fat : solvent of 1 : 4 to 1 : 8 is used. After a solution of coconut oil has been prepared in the solvent, the solution is cooled to -10 to +10°C, preferably -5 to +5°C.

EXAMPLE I

100 kg of coconut oil was mixed with 600 l of acetone. The mixture was cooled to 0°C. The crystallized fat was separated from the mother liquor and washed twice with 1-2 l of cold acetone. After removal of the acetone, a coconut olein was obtained (yield abt. 60%). This olein displayed the characteristics of Table I.

2

## TABLE I

### Coconut Olein

| | |
|---|---|
| I.V. | 10.8 |
| Oleic acid | 8.8% |
| Slip melting point | 22°C |
| $N_0$ (n.s.) | 87 |
| $N_{10}$ (n.s.) | 57 |
| $N_{20}$ (n.s.) | 15 |
| $N_{25}$ (n.s.) | 0 |

FAME

| | |
|---|---|
| $C_8$ | 7.8 |
| $C_{10}$ | 6.0 |
| $C_{12}$ | 46.6 |
| $C_{14}$ | 16.4 |
| $C_{16}$ | 8.8 |
| $C_{18}$ | 2.8 |
| $C_{18:1}$ | 8.8 |
| $C_{18:2}$ | 2.3 |

EXAMPLE II

Chocolate compositions were prepared with the ingredients and amounts mentioned in Table II.

TABLE II

| | A* | B | C | D | E |
|---|---|---|---|---|---|
| Sugar | 40 | 32 | 25.8 | 25.8 | 25.8 |
| CCM | 29 | 23.2 | | | 26.0 |
| CCB | 10.6 | 8.5 | | | |
| CN-f | 20 | 36 | 58.5 | 56.9 | 45.5 |
| Emulsifier | 0.4 | 0.3 | 1 | 1 | 1 |
| CCP | - | - | 13 | 14.6 | |
| S.M.P. | | | 1.7 | 1.7 | 1.7 |
| Fat content | 47 | 58 | 60.8 | 60.8 | 60.8 |

* not according to the invention

Water ice sticks were dipped by hand into compositions A-E of Table II. The temperature of the sticks was -13°C; the temperature of the coating compositions was 38°C.

The dripping times and the drying were measured by means of a stopwatch. The weight of the coating was also measured while the performance of the coating was judged by a panel.

The outcome is mentioned in Table III.

## TABLE III

|                        | A   | B    | C    | D    | E    |
|------------------------|-----|------|------|------|------|
| Dripping time (sec)    | -   | 8    | 4    | 6    | 7    |
| Drying time (sec)      | -   | -    | 13   | 15   | 17   |
| Weight of coating (g)  | 11  | 6.4  | 7.5  | 7.5  | 6.9  |
| Brittleness            | ++  | ++++ | ++++ | ++++ | ++++ |
| Cool-melt              | ++  | ++++ | ++++ | ++++ | ++++ |

**Claims**

1. Coconut olein fraction, characterized by an oleic acid content of 6-15 wt.%, an I.V. of 8-20, and N-values (not-stabilized) of $N_0 \geq = 70$ and $N_{20} = 5$-20.

2. Coconut olein fraction according to Claim 1, wherein I.V. = 9-15, $N_0 = 70$-90 and $N_{20} = 14$-18.5.

3. Chocolate compositions suitable for icings or coatings for frozen desserts, wherein at least 50 wt.% of a fat mixture comprising at least 50% of the coconut olein fraction of Claim 1 or 2 is present in addition to the normal amounts of sugar, cocoa mass and emulsifier.

4. Icings and ice coatings consisting of the chocolate composition of Claim 3.

5. Ice creams and frozen desserts, which are provided with a coating according to Claim 4.

6. Use of coconut olein fractions with the composition according to Claim 1 or 2, characterized by the use of these fractions in chocolate compositions for the coating of ice creams and/or frozen desserts.

7. Process for the preparation of coconut olein fractions, wherein a coconut oil is dry- or wet-fractionated, recovering coconut olein fractions that meet the requirements of Claims 1 and/or 2.

8. Process according to Claim 1, wherein the process is a wet-fractionation process, using hexane, petroleum ether or acetone as a solvent.

9. Process according to Claim 8, wherein a weight/volume ratio of fat : solvent is used of 1 : 4 to 1 : 8.

10. Process according to Claims 8 and 9, wherein the mixture of coconut oil and solvent is cooled to -10 to +10°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | JOURNAL OF THE AMERICAN OIL CHEMISTS' SOCIETY. vol. 62, no. 2, February 1985, CHAMPAIGN US pages 385 - 390; J.B.ROSSEL: "Fractionation of Lauric Oils" * table I-IV * * page 387, left-hand column, paragraph 2 * * page 389, right-hand column, paragraph 2 * | 1-10 | A23D9/00 C11B7/00 A23G9/02 A23G3/00 |
| A | EP-A-115655 (UNILEVER) * claims 1, 3-5 * * page 2, line 24 - page 3, line 11 * | 1, 2 | |
| A | US-A-4368211 (J.R.BLAKE) * column 6, line 54 - column 7, line 28 * * example II, III * | 3-6 | |
| A | US-A-4379176 (K.SCHERWITZ) * column 3, lines 34 - 46 * | 3-6 | |
| A | EP-A-23150 (UNILEVER) * claims 1, 7 * * page 1, line 1 - page 3, line 24 * * page 4, lines 1 - 37 * | 1-6 | TECHNICAL FIELDS SEARCHED (Int. Cl.5 ) A23D C11B A23G |

The present search report has been drawn up for all claims

| Place of search | Date of completion of the search | Examiner |
|---|---|---|
| THE HAGUE | 22 AUGUST 1991 | VUILLAMY V.M.L. |